# EUROPEAN PATENT APPLICATION

(11) **EP 1 983 637 A1**
(43) Date of publication of application: **22.10.2008**
(21) Application number: 07106320.0
(22) Date of filing: 17.04.2007
(51) Int. Cl.: H02K 21/12

(54) **Three-Phase DC Motor**

(71) Applicant: Delphi Taiwan Ltd., Hu Kou Hsin chu 303 (TW)
(72) Inventor: Kuo, Li-Te, HSINCHU HSIEN (TW); Jang, Chau-Shin, 303, Hsinchu County (TW)
(74) Representative: Viering, Jentschura & Partner

(57) **Abstract**

A three-phase DC motor includes a rotor having plurality of magnetic poles (1), and a stator (2). The stator (2) has three corners. The second corner (212) is adjacent to a first direction of the first corner (210). The third corner (214) is adjacent to a second direction of the first corner (210). The first corner (210), the second corner (212), and the third corner (214) extend forwards to the rotor to form a first winding teeth (216), a second winding teeth (218) and a third winding teeth (219) respectively. A first winding, a second winding, and a third winding respectively wind around the first winding teeth, the second winding teeth, and the third winding teeth. The mechanical angle between the first winding teeth and the second winding teeth is between 75 and 85 degrees. The mechanical angle between the first winding teeth and the third winding teeth is also between 75 and 85 degrees.

## Description

### BACKGROUND OF THE INVENTION

### 1. Field of the Invention

The present invention relates to a three-phase DC motor. In particular, this invention relates to a three-phase DC motor that includes a stator with three winding slots and a circular rotor, the rotor being an inner rotor type.

### 2. Description of the Related Art

Flat and small DC motors are applied to a variety of fields, such as information products. As information products have become smaller and smaller, the motors used in the information products, such as cooling fan motors, vibration motors, etc, has also become flatter and smaller. When the rotor of the motor is an outer rotor and the dimension of the motor becomes smaller and smaller, the dimensions of the motor stator are limited due to the dimensions of the outer rotor. Therefore, the outer diameter of the winding slot of the stator has to be smaller. When the winding slot is too small, it is difficult to manufacture, and the effective moment arm length of the motor electromagnetic torque is decreased so that the output torque is too low.

If the rotor of the motor is an inner rotor structure, such as a general enclosed outer stator winding slot structure, it is difficult to wind the coil on the winding slot when the motor becomes smaller. Furthermore, the symmetrical winding slots of the motor occupy the space between the border of the motor and the outer dimension, of the rotor. The outer diameter of the rotor becomes small so that the effective moment arm length is also small. It suffers from inadequate output torque.

In order to increase the effective moment arm length related to the rotor to enhance the output torque, the motor fully utilizes the space between a general square border of the motor module and the circular rotating elements, and uses an inner rotor to achieve the requirements of being flat, small, and increasing the output torque. However, there are four corners in the space between the square border and the circular rotating elements. The angle between the corners is 90 degrees. The motor cannot operate as a three-phase motor due to the angle between the winding slots is 90 degrees. The motor only can be operated as a single-phase motor. The single-phase motor has a lot of drawbacks, including the existence of a starting dead point, the large torque ripple, and low efficiency. Especially, when a flat and small motor operates to output a small torque, it is not easy to start the motor due to the friction force and the starting dead point.

### SUMMARY OF THE INVENTION

One particular aspect of the present invention is to provide a three-phase DC motor. The three-phase DC motor can be designed to be flat and small, and it has the merits of a three-phase motor, including the lack of a starting dead point, and torque ripple being low, etc.

The three-phase DC motor includes a rotor with a magnet, and a stator. The rotor has a plurality of magnetic poles. The stator has a first winding slot, a second winding slot, and a third winding slot. The second winding slot is adjacent to a first direction of the first winding slot. The third winding slot is adjacent to a second direction of the first winding slot. A first winding, a second winding, and a third winding respectively wind around the first winding slot, the second winding slot, and the third winding slot. The mechanical angle between the first winding slot and the second winding slot is between 75 and 85 degrees. The mechanical angle between the first winding slot and the third winding slot is also between 75 and 85 degrees.

The present invention fully utilizes the space between the square shell of a motor module and the circular rotating elements, and uses the inner rotor to provide a novel motor winding slot structure and a gap between the winding slots, and magnetic poles of the rotor to form a three-phase DC motor. The three-phase DC motor of the present invention solves the problems described above, including the existence of a starting dead point, the torque ripple being large, and low efficiency. Furthermore, the three-phase DC motor can be designed to be flat and small, and has merits of a three-phase motor, including no starting dead point, low torque ripple, and high efficiency, etc.

For further understanding of the invention, reference is made to the following detailed description illustrating the embodiments and examples of the invention. The description is only for illustrating the invention and is not intended to be considered limiting of the scope of the claim.

### BRIEF DESCRIPTION OF THE DRAWINGS

The drawings included herein provide a further understanding of the invention. A brief introduction of the drawings is as follows:
FIG. 1 is a schematic diagram of the magnetic poles of the three-phase DC motor of the first embodiment of the present invention;
FIGs. 2A~2F are schematic diagrams of the distribution of the magnetic flux and the magnetic line of force of the present invention;
FIG. 3 is a schematic diagram of the magnetic poles of the three-phase DC motor of the second embodiment of the present invention;
FIGs. 4A∼4G are waveform diagrams of the generated torque when the present invention uses a 120 driving degree 6-step driving method with square driving waveform to change the driving phases of the current on the winding coils;
FIGs. 5A~5G are waveform diagrams of the generated torque when the present invention uses a 180 degree driving method with square driving waveform to change the driving phases of the current on the winding coils;
FIGs. 6A∼6G are waveform diagrams of the generated torque when the present invention uses a 150 degree 12-step driving method with square driving waveform to change the driving phases of the current on the winding coils;
FIGs. 7A~7G are waveform diagrams of the generated torque when the present invention uses a 180 degree driving method with sine driving waveform to change the driving phases of the current on the winding coils;
FIG. 8 is a waveform diagram of the gradually soft-switching waveform; and
FIGs. 9A~9G are waveform diagrams of the generated torque when the present invention uses a 180 degree driving method with trapezoid waveform to change the driving phase of the current on the winding coils.

### DETAILED DESCRIPTION OF THE PREFERRED EMBODIMENTS

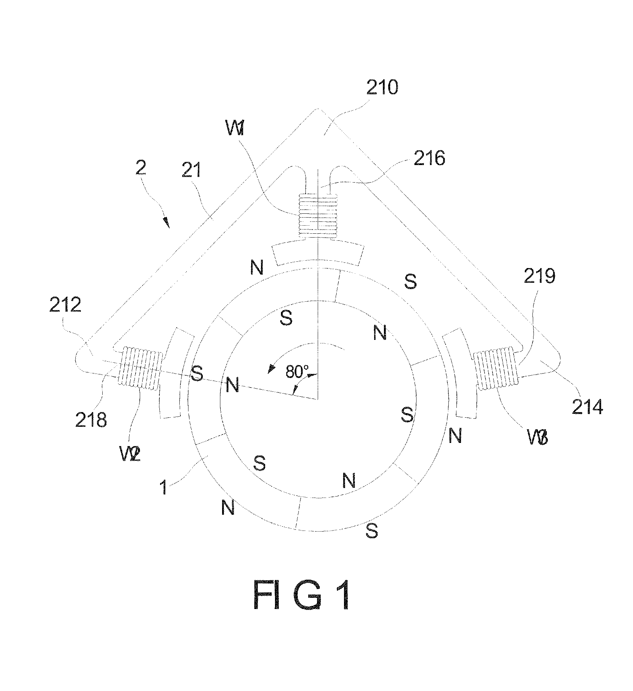

Reference is made to FIG. 1, which shows a schematic diagram of the magnetic poles of the three-phase DC motor of the first embodiment of the present invention. The three-phase DC motor includes a rotor 1, and a stator 2. The rotor 1 has a plurality of magnetic poles. The stator 2 has a first corner 210, a second corner 212, and a third corner 214. The second corner 212 is adjacent to a first direction of the first corner 210. The third corner 214 is adjacent to a second direction of the first corner 210. The first corner 210, the second corner 212, and the third corner 214 extend forwards to the rotor 1 to form a first winding slot 216, a second winding slot 218, and a third winding slot 219 respectively. A first winding coil W1, a second winding coil W2, and a third winding coil W3 respectively wind around the first winding slot 216, the second winding slot 218, and the third winding slot 219. The mechanical angle between the first winding slot 216 and the second winding slot 218 is between 75 and 85 degrees. The mechanical angle between the first winding slot 216 and the third winding slot 219 is also between 75 and 85 degrees. There is an air-gap between the first winding slot 216, the second winding slot 218, and the third winding slot 219 and the rotor 1.

Reference is made to FIG. 1 again. The mechanical angle between the first winding slot 216, and the second winding slot 218 and the third winding slot 219 is designed as 80 degrees. The mechanical angle between the first winding coil W1 wound on the first winding slot 216, and the second winding coil W2 wound on the second winding slot 218 and the third winding coil W3 wound on the third winding slot 219 is also 80 degrees. The rotor 1 includes a magnet. The magnetized poles of the magnet are 6 or 12. The magnetization is in the radial direction wherein the N magnetic pole and the S magnetic pole cross.

In this embodiment, the magnetized poles of the rotor 1 are 6. When the motor rotates one circle, there are three N-S magnetic cycles. Therefore, the electrical signal angle is three times the mechanical angle of the motor rotation. When the mechanical angle between the first winding slot 216 and the second winding slot 218 is 80 degrees, the electrical signal angle is 240 degrees. This means that the electrical signal angle between the second winding slot 218 and the first winding slot 216 is -120 degrees. The mechanical angle between the third winding slot 219 and the first winding slot 216 is 80 degrees and the third winding slot 219 is located in the direction that is opposite to the second winding slot 218, the equivalent mechanical angle is -80 degrees. The electrical signal angle is -240 degrees. In other words, the electrical signal angle between the third winding slot 219 and the first winding slot 216 is +120 degrees. Therefore, in the stator 2, the sequence of the three winding slots is the third winding slot 219, the first winding slot 216, and the second winding slot 218, and the electrical signal angle difference between the three winding slots is 120 degrees. This meets the operating condition for a three-phase motor.

Furthermore, according to the previous principle, when the magnetized poles of the rotor 1 are twelve (not shown in the figure) and the motor rotates one circle, there are six N-S magnetic cycles. Therefore, the electrical signal angle is six times that of the mechanical angle of the motor rotation. When the mechanical angle between the first winding slot 216 and the second winding slot 218 is 80 degrees, the equivalent electrical signal angle is 480 degrees. This means that the electrical signal angle between the second winding slot 218 and the first winding slot 216 is 120 degrees. The mechanical angle between the third winding slot 219 and the first winding slot 216 is 80 degrees and when the third winding slot 219 is located in the direction that is opposite to the second winding slot 218, the equivalent mechanical angle is -80 degrees. The electrical signal angle is equal to -480 degrees. In other words, the electrical signal angle between the third winding slot 219 and the first winding slot 216 is
- 120 degrees. Therefore, in the stator 2, the sequence of the three winding slots is the second winding slot 218, the first winding slot 216, and the third winding slot 219, and the electrical signal angle difference between the three winding slots is 120 degrees. This also meets the operating condition for a three-phase motor.

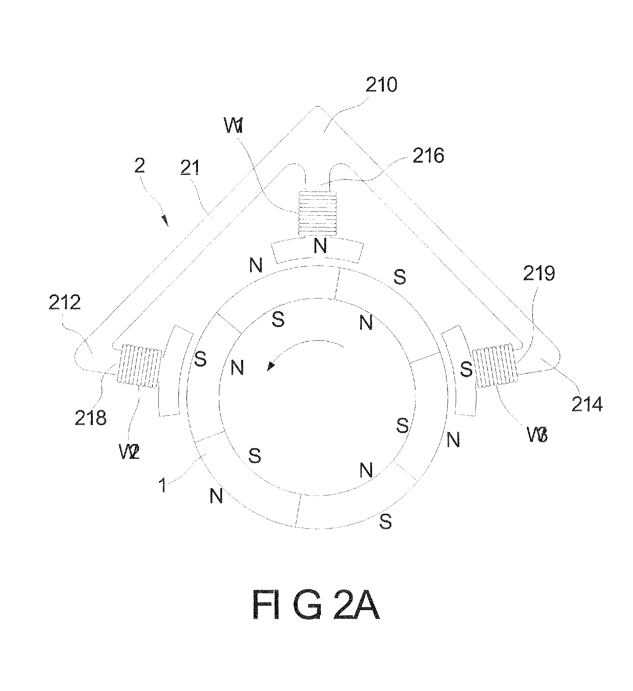

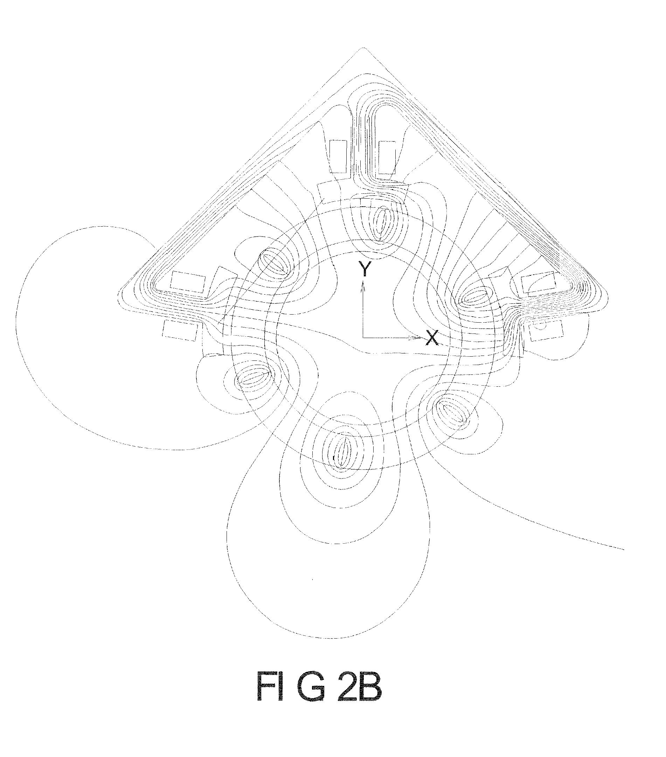

Reference is made to FIGs. 2A~2F, which show schematic diagrams of the distribution of the magnetic flux of the present invention. In FIG. 2A, the first winding coil W1 and the third winding coil W3 are controlled to be conducted, and the second winding coil W2 is floated. At this moment, the first winding slot 216 is inducted to generate an N electromagnetic pole, and the third winding slot 219 is inducted to generate an S electromagnetic pole. The N electromagnetic pole generated from the first winding slot 216 attracts the magnetized S magnetic pole and repels the magnetized N magnetic pole in the rotor 1. The S electromagnetic pole generated from the third winding slot 219 attracts the magnetized N magnetic pole and repels the magnetized S magnetic pole in the rotor 1. Via the reactions between the magnetic poles, the N electromagnetic pole generated from the first winding slot 216 and the S electromagnetic pole generated from the third winding slot 219 make the rotor 1 rotate counterclockwise. The magnetic line of force generated from the reactions between the magnetic poles is shown in FIG. 2B.

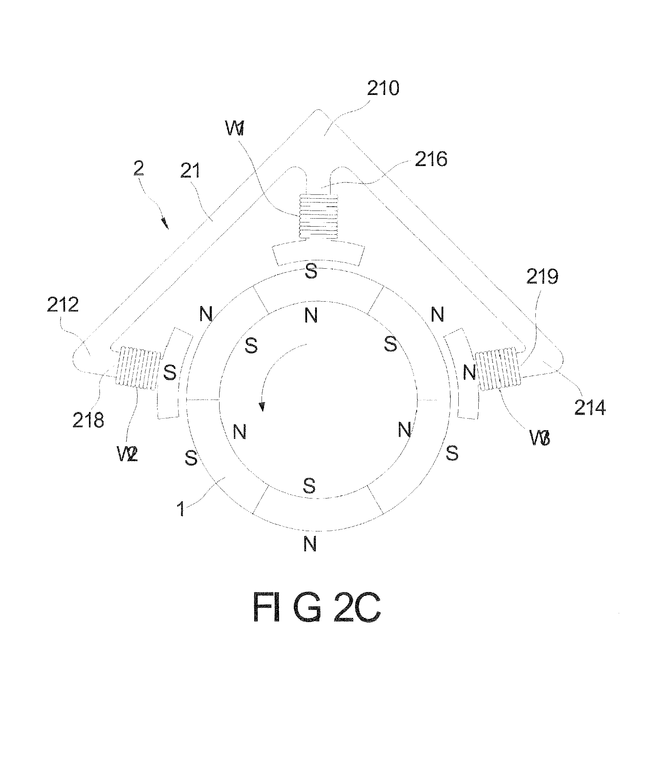

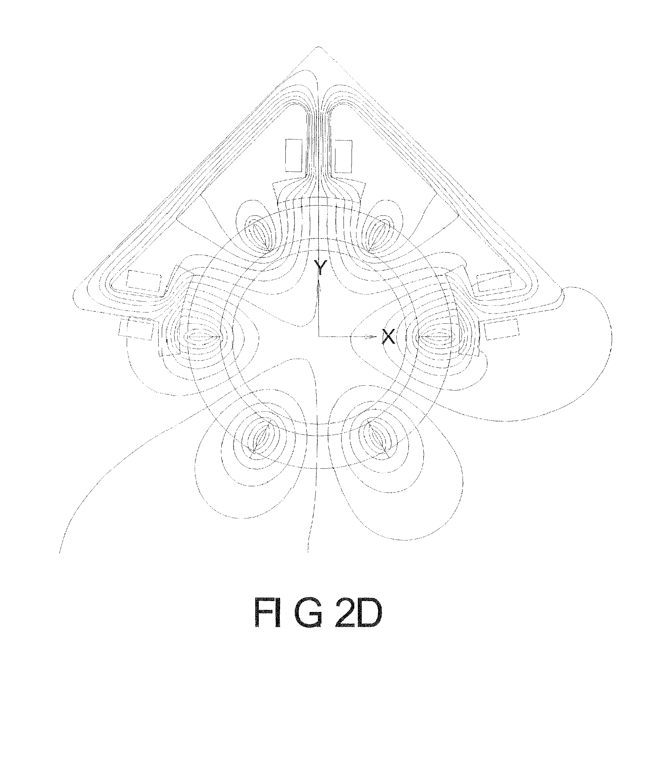

In FIG. 2C, the second winding coil W2 and the third winding coil W3 are controlled to be conducted, and the first winding coil W1 is floated. At this moment, the third winding slot 219 is inducted to generate an N electromagnetic pole, and the second winding slot 218 is inducted to generate an S electromagnetic pole. The N electromagnetic pole generated from the third winding slot 219 attracts the magnetized S magnetic pole and repels the magnetized N magnetic pole in the rotor 1. The S electromagnetic pole generated from the second winding slot 218 attracts the magnetized N magnetic pole and repels the magnetized S magnetic pole in the rotor 1. Via the reactions between the magnetic poles, the N electromagnetic pole generated from the third winding slot 219 and the S electromagnetic pole g enerated from the second winding slot 218 make the rotor 1 rotate counterclockwise. The magnetic line of force generated from the reactions between the magnetic poles is shown in FIG. 2D.

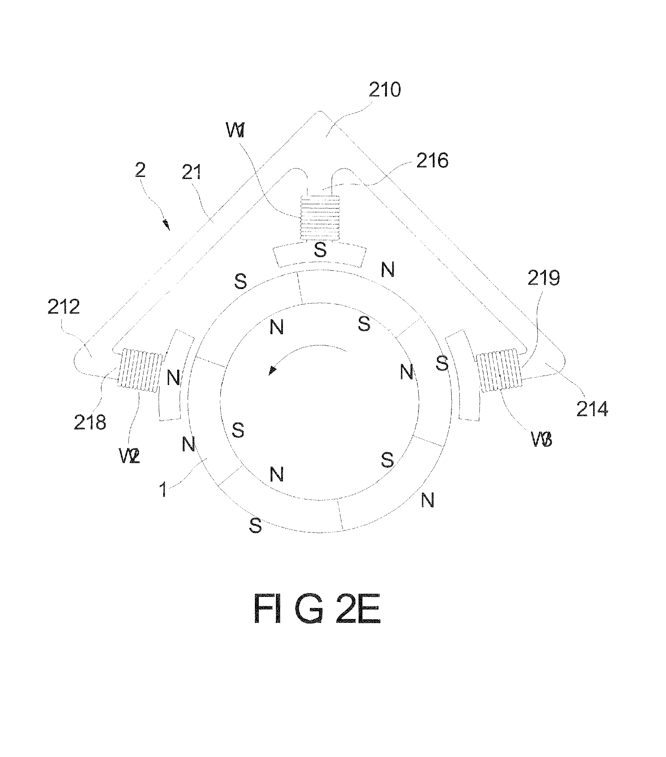

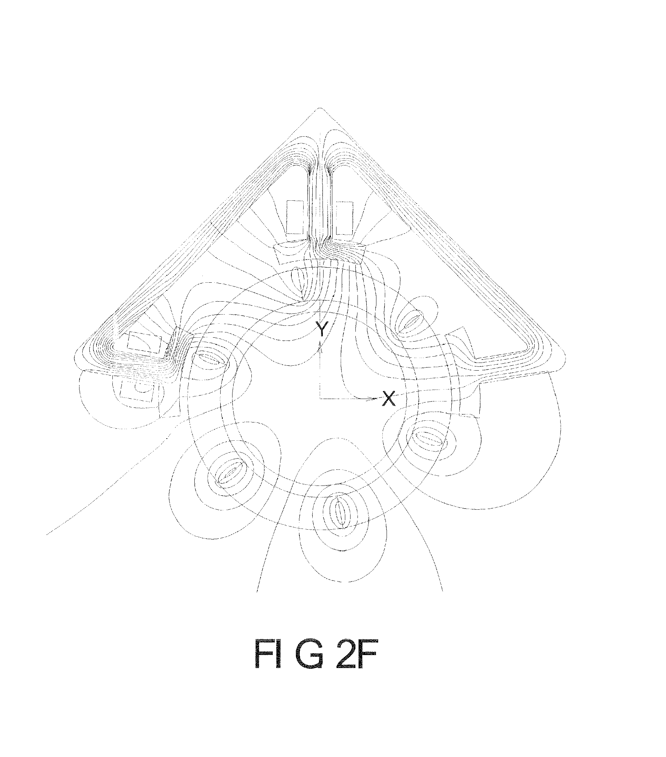

In FIG. 2E, the first winding coil W1 and the second winding coil W2 are controlled to be conducted, and the third winding coil W3 is floated. At this moment, the second winding slot 218 is inducted to generate an N electromagnetic pole, and the first winding slot 216 is inducted to generate an S electromagnetic pole. The N electromagnetic pole generated from the second winding slot 218 attracts the magnetized S magnetic pole and repels the magnetized N magnetic pole in the rotor 1. The S electromagnetic pole generated from the first winding slot 216 attracts the magnetized N magnetic pole and repels the magnetized S magnetic pole in the rotor 1. Via the reactions between the electromagnetic poles, the N electromagnetic pole generated from the second winding slot 218 and the S electromagnetic pole generated from the first winding slot 216 make the rotor 1 rotate counterclockwise. The magnetic line of force generated from the reactions between the magnetic poles is shown in FIG. 2F.

From FIGs. 2A to 2F, the user merely controls the windings of the winding slots of the stator 2 to be conducted or floated so as to make the winding slots induct to generate electromagnetic poles. Furthermore, a rotating electromagnetic field can be generated on the winding slots of the stator 2 by controlling the conducting sequence of the windings. The rotating electromagnetic field makes the rotor 1 rotate. Thereby, the merits of a three-phase motor, including the lack of a starting dead point, and low torque ripple, etc, are achieved.

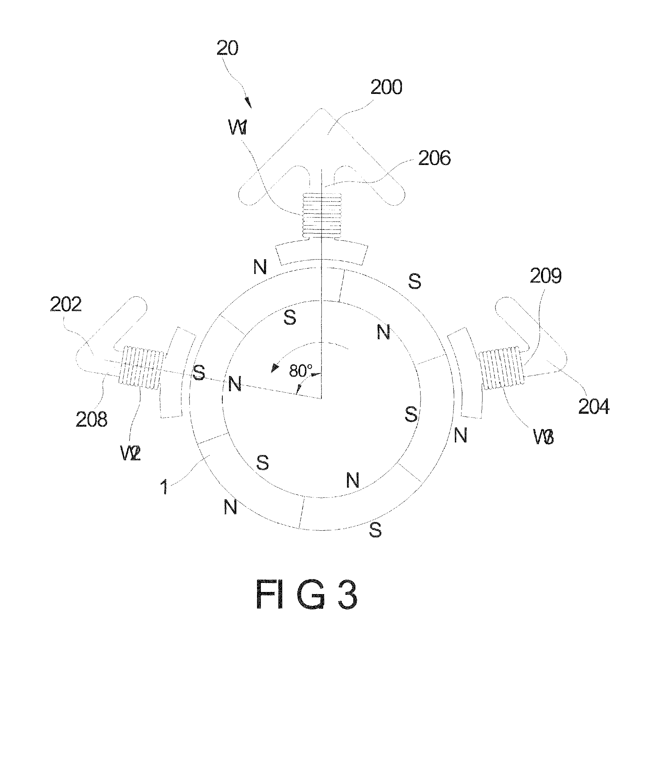

Reference is made to FIG. 3, which shows a schematic diagram of the three-phase DC motor of the second embodiment of the present invention. The elements in the second embodiment that are the same as ones of the first embodiment are labeled as being the same. The operating principle and the effects of the second embodiment are the same as those of the first embodiment. The main difference is the stator structure.

In the second embodiment, the stator 20 has a first corner 200, a second corner 202, and a third corner 204. The second corner 202 is adjacent to a first direction of the first corner 200. The third corner 204 is adjacent to a second direction of the first corner 200. The first corner 200, the second corner 202, and the third corner 204 extend forwards to the rotor 1 to form a first winding slot 206, a second winding slot 208, and a third winding slot 209 respectively. A first winding coil W1, a second winding coil W2, and a third winding coil W3 respectively wind around the first winding slot 206, the second winding slot 208, and the third winding slot 209. The mechanical angle between the first winding slot 206 and the second winding slot 208 is between 75 and 85 degrees. The mechanical angle between the first winding slot 206 and the third winding slot 209 is also between 75 and 85 degrees. There is an air-gap between the first winding slot 206, the second winding slot 208, and the third winding slot 209 and the rotor 1.

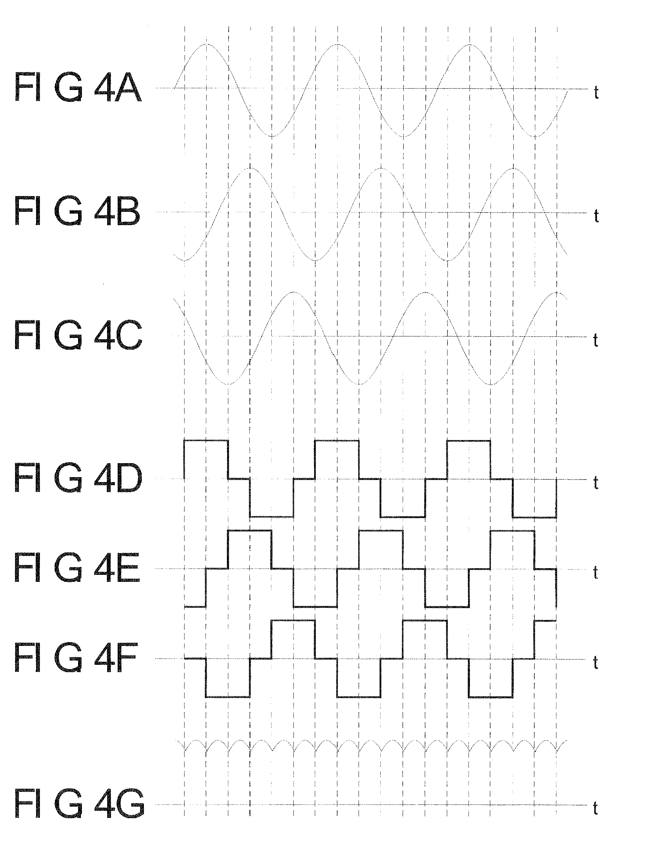

FIGs. 4A~4G are waveform diagrams of the generated torque when the present invention uses a 120 driving degree 6-step driving method with square driving waveform to change the driving phase of the current on the winding coils. FIGs. 4A∼4C are waveform diagrams of the torque constant of the three-phase DC motor of the present invention. The present invention can use a 120 driving degree 6-step driving method with square driving waveform to control the three winding coils to be conducted or floated, as shown in FIGs. 4D~4F. The generated torque is shown in FIG. 4G.

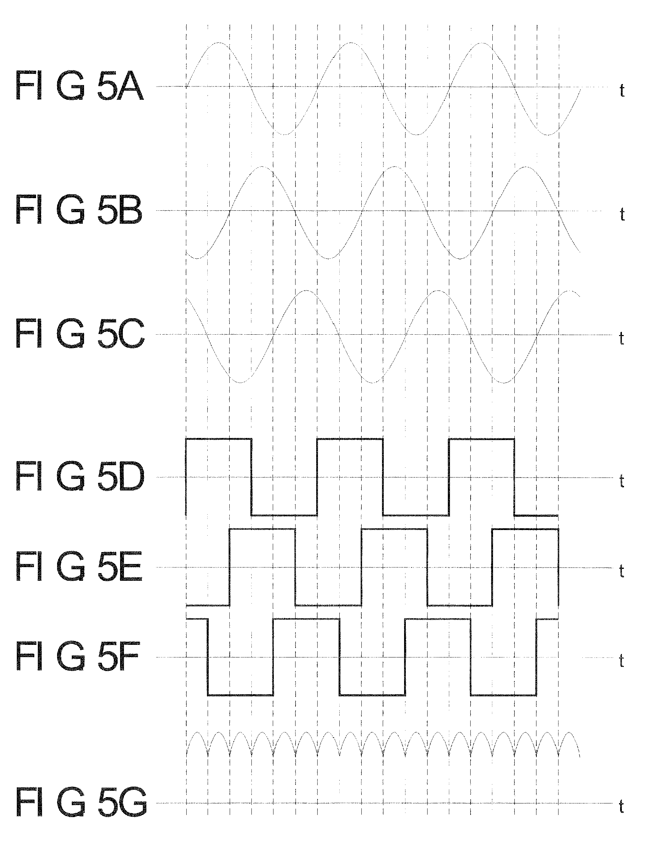

The present invention also can use a 180 driving degree driving method with square driving waveform to control the three winding coils to be conducted or floated, as shown in FIGs. 5D~5F. The generated torque is shown in FIG. 5G. FIGs. 5A~5C are waveform diagrams of the torque constant of the three-phase DC motor of the present invention.

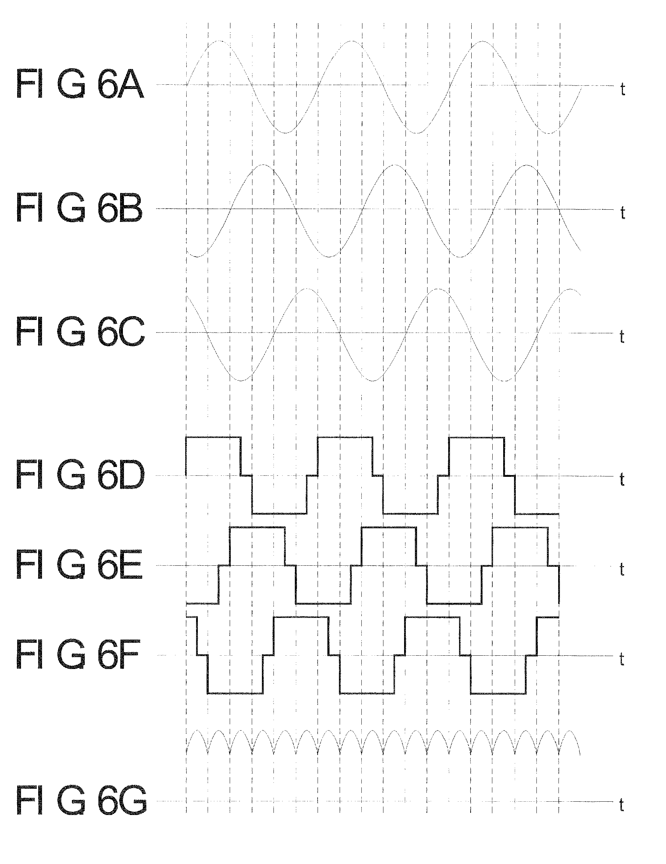

The present invention also can use a 150 driving degree 12-step driving method with square driving waveform to control the three winding coils to be conducted or floated, as shown in FIGs. 6D~6F. The generated torque is shown in FIG. 6G. FIGs. 6A~6C are waveform diagrams of the torque constant of the three-phase DC motor of the present invention.

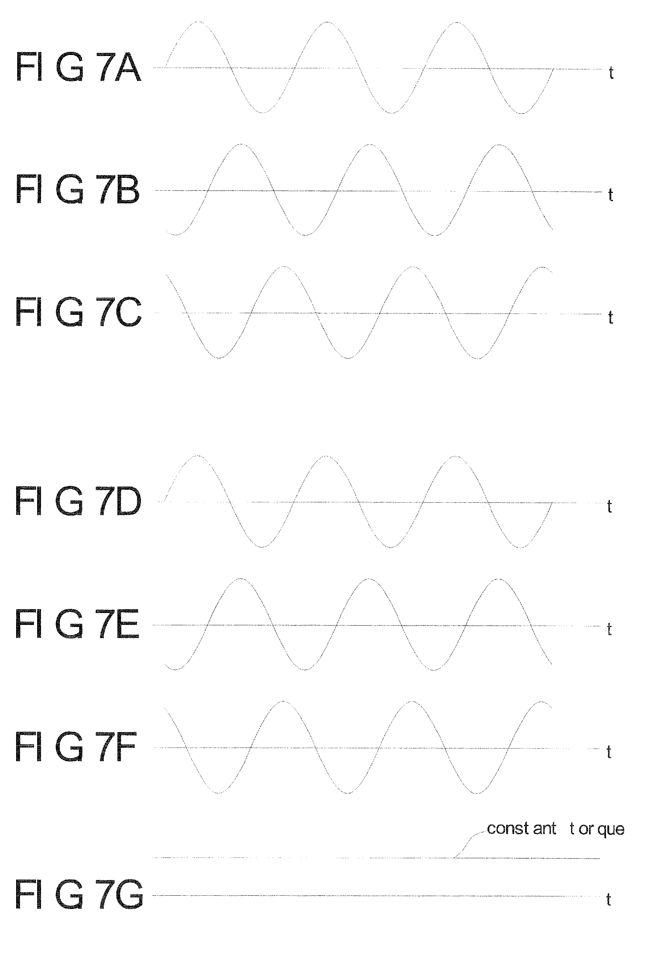

The present invention also can use a 180 driving degree driving method with sine driving waveform to control the three winding coils to be conducted or floated, as shown in FIGs. 7D~7F. The generated torque is shown in FIG. 7G. FIGs. 7A~7C are waveform diagrams of the torque constant of the three-phase DC motor of the present invention.

When the 120 driving degree 6-step driving method with square driving waveform shown in FIGs. 4D~4F or the 180 driving degrees driving method with square driving waveform shown in FIGs. 5D~5F are used for changing the driving phases of the current on the winding coils, the hardware for changing driving phase can be implemented by using a contacting method that a brush contacting on the stator or a brushless method that uses a sensor to detect the location of the rotor. When the 120 driving degree 6-step driving method with square driving waveform shown in FIGs. 4D~4F is used for changing the driving phases, it can obtain the induced electromotive force of the winding coils during the non-conducting period so as to determine the location of the rotor to execute the phase-changing process. The brush or the sensor is not required. A sensorless three-phase brushless motor is implemented.

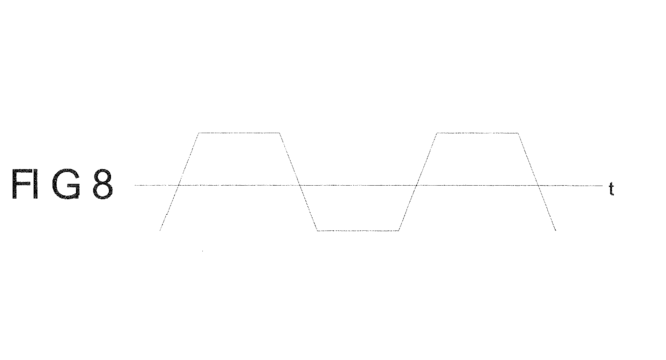

When a brushless method is used for changing the driving phases, a voltage impulse generated from the inductance effect of the winding coils of the motor occurs due to the suddenly square driving waveform changement. This periodic impulse will induce vibration and generate noise. In order to solve this problem, the square driving waveform can be replaced by a gradually soft-switching waveform as shown in FIG. 8 when the driving phases are changing. The voltage impulse generated from the inductance effect of the winding coils of the motor is lowered, and the induced vibration and noise are decreased. The gradually soft-switching method can be implemented by inducing the slope of the signal variation of the sensor or a constant time slope.

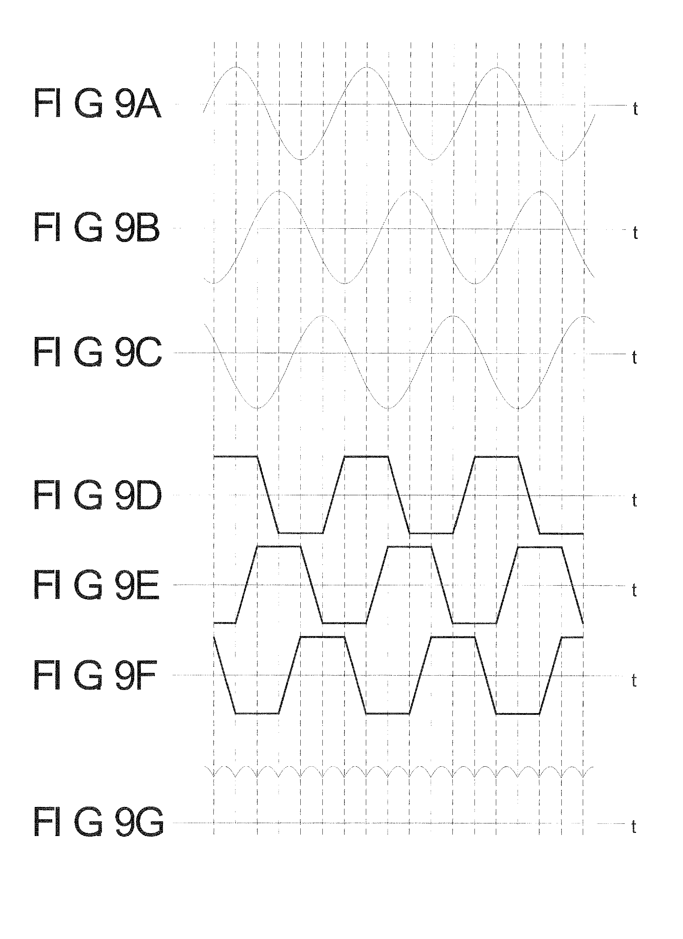

When the switching period of the gradually soft-switching method is as long as to contact the previous status of the driving phases, a 180 driving degree driving method with trapezoid driving waveform as shown in FIGs. 9D~9F is used to change the driving phases. The 180 driving degrees driving method with trapezoid driving waveform controls the three winding coils to be conducted or floated. The generated torque is shown in FIG. 9G. FIGs. 9A~9C are waveform diagrams of the torque constant of the three-phase DC motor of the present invention.

When the motor is starting, the voltage of winding coil is not retrained by the induced electromotive force due to its low rotation speed. A larger current occurs in a very short time. It is easy to damage the winding coils or the driving IC. If a maximum rotation speed is suddenly applied to accelerate the motor while starting a fan, it is noisy. In order to solve the problem, a timing method is adopted to gradually increase the driving current of the winding coils of the motor by using the three-phase DC motor of the present invention. Gradually increasing the driving current can be implemented by using a rapid PWM switch to switch the voltage of the winding coils, or using a linear control method to control the current flowing through the driving transformer. In the same way, the rotation speed of the motor can also be controlled by using a rapid PWM switch to switch the voltage of the winding coils, or by using a linear control method to control the current flowing through the driving transformer.

The three-phase DC motor includes a rotor having plurality of magnetic poles, and a stator having a special structure. The stator has a first corner, a second corner, and a third corner. The second corner is adjacent to a first direction of the first corner. The third corner is adjacent to a second direction of the first corner. The first corner, the second corner, and the third corner extend forwards to the rotor to form a first winding slot, a second winding slot, and a third winding slot respectively. A first winding coil, a second winding coil, and a third winding coil respectively wind around the first winding slot, the second winding slot, and the third winding slot. The mechanical angle between the first winding slot and the second winding slot is between 75 and 85 degrees. The mechanical angle between the first winding slot and the third winding slot is also between 75 and 85 degrees.

The present invention fully utilizes the space between the square border of a general motor module and the circular rotating elements, and uses the inner rotor to provide a novel motor winding slot structure and a gap, and magnetic poles of the rotor structure to form a three-phase DC motor. The three-phase DC motor can solve the described problems, including the existence of a starting dead point, a large torque ripple, and low efficiency. The three-phase DC motor can be designed to be flat and small, and has the merits of a three-phase motor, including the lack of a starting dead point, low torque ripple, etc.

The description above only illustrates specific embodiments and examples of the invention. The invention should therefore cover various modifications and variations made to the herein-described structure and operations of the invention, provided they fall within the scope of the invention as defined in the following appended claims.

## Claims

1. A three-phase DC motor, comprising:
a rotor with a magnet having a plurality of magnetic poles; and
a stator having a first winding slot, a second winding slot, and a third winding slot, wherein the second winding slot is adjacent to a first direction of the first winding slot, the third winding slot is adjacent to a second direction of the first winding slot, wherein a first winding, a second winding, and a third winding respectively wind around the first winding slot, the second winding slot, and the third winding slot, the mechanical angle between the first winding slot and the second winding slot is between 75 and 85 degrees, and the mechanical angle between the first winding slot and the third winding slot is also between 75 and 85 degrees.

2. The three-phase DC motor as claimed in claim 1, wherein the magnet on the rotor has six magnetic poles magnetized in the radial direction.

3. The three-phase DC motor as claimed in claim 1, wherein the magnet on the rotor has twelve magnetic poles magnetized in the radial direction.

4. The three-phase DC motor as claimed in claim 1, wherein a brush on the said stator is hereby used for changing the driving phases of the current on the said winding coils when the three-phase DC motor is operating.

5. The three-phase DC motor as claimed in claim 1, wherein a sensor and a phase-changing circuit are hereby used to instead of the said brush for changing the driving phases of the current on the said winding coils when the three-phase DC motor is operating.

6. The three-phase DC motor as claimed in claim 1, wherein a sensorless phase-changing circuit is hereby used to instead of the said brush for changing the driving phases of the current on the said winding coils when the three-phase DC motor is operating.

7. The three-phase DC motor as claimed in claim 1, wherein a 120 driving degree 6-step driving method with square driving waveform is used for changing the driving phases of the current on the said winding coils when the three-phase DC motor is operating.

8. The three-phase DC motor as claimed in claim 1, wherein a timing method is used for forming gradually soft-switching effect in driving status switch when the three-phase DC motor is operating.

9. The three-phase DC motor as claimed in claim 1, wherein the said sensor signals are amplified for forming gradually soft-switching effect in driving status switch when the three-phase DC motor is operating.

10. The three-phase DC motor as claimed in claim 1, wherein a 180 driving degree driving method is used for changing the driving phases of the current on the said winding coils when the three-phase DC motor is operating.

11. The three-phase DC motor as claimed in claim 1, wherein a 150 driving degree 12 step driving method with square driving waveform is used for changing the driving phases of the current on the said winding coils when the three-phase DC motor is operating.

12. The three-phase DC motor as claimed in claim 1, wherein a timing method is used for forming gradually soft-starting effect in starting the three-phase DC motor.

13. The three-phase DC motor as claimed in claim 1, wherein a PWM signal is used for controlling a rotating speed of the three-phase DC motor when the three-phase DC motor is operating.

14. The three-phase DC motor as claimed in claim 1, wherein a linear signal for controlling the magnitude of the said driving current is used for controlling a rotating speed of the three-phase DC motor when the three-phase DC motor is operating.
